# EUROPÄISCHE PATENTSCHRIFT

(11) **EP 1 624 079 B1**
(45) Veröffentlichungstag und Bekanntmachung des Hinweises auf die Patenterteilung: **28.11.2007**
(21) Anmeldenummer: 05016386.4
(22) Anmeldetag: 28.07.2005
(51) Int. Cl.: C22B 1/243, C22B 7/02, C22B 7/04

(54) **Verfahren zur Gewinnung von Eisen aus eisenoxidhaltigem Abfall sowie Formling zur Durchführung dieses Verfahrens**
Process for winning iron from waste material containing iron oxides and briquette for carrying out this process
Procédé de récupération de fer de résidus contenant de l'oxyde de fer et briquette pour la mise en oeuvre de ce procédé

(30) Priorität: 02.08.2004 DE 102004037632; 08.03.2005 DE 102005011082
(43) Veröffentlichungstag der Anmeldung: 08.02.2006
(73) Patentinhaber: Hafner, Heinz, 41541 Dormagen (DE)
(72) Erfinder: Hafner, Heinz, 41541 Dormagen (DE)
(74) Vertreter: Paul, Dieter-Alfred

(56) Entgegenhaltungen:
- DE-A1- 3 139 375
- US-A- 4 063 944
- US-A1- 2002 166 414
- PATENT ABSTRACTS OF JAPAN Bd. 1999, Nr. 03, 31. März 1999 (1999-03-31) & JP 10 330822 A (NIPPON YAKIN KOGYO CO LTD; ASAHI GIKEN HANBAI KK), 15. Dezember 1998 (1998-12-15)
- PATENT ABSTRACTS OF JAPAN Bd. 011, Nr. 106 (C-414), 3. April 1987 (1987-04-03) & JP 61 253330 A (NIPPON STEEL CORP; others: 01), 11. November 1986 (1986-11-11)

## Beschreibung

Die vorliegende Erfindung betrifft ein Verfahren zur Gewinnung von Eisen, insbesondere Gußeisen, aus eisenoxidhaltigem Abfall, der bei der Erschmelzung von Eisen und Stahl beispielsweise in Form von Stäuben, Schlacken oder dergleichen anfällt, sowie einen Formling zur Durchführung dieses Verfahrens.

In Stahlwerken fallen erhebliche Mengen an eisenoxidhaltigem Abfall an, beispielsweise in Form von Gicht- oder Gießhallenstaub, aber auch in Form von Roheisenentschwefelungsschlacke und anderen eisenoxidhaltigen Abfällen. Es handelt sich derzeit um eine Menge von 1,7 Mio. Tonnen pro Jahr. Der Fe-Anteil liegt dabei zwischen 27 und 63 %, meist zwischen 52 und 55 %.

Die Stahlwerke geben diese Abfälle bis heute an spezielle Hüttenwerke ab. Mittels eines komplizierten Verfahrens werden die Abfälle dort aufbereitet. Das dabei erhaltene Fe ist jedoch von minderer Qualität. Außerdem müssen die Stahlwerke hohe Gebühren - ca. EUR 40,00 pro Tonne - für die Abnahme des Abfalls bezahlen.

Aus der US 4,063,944 ist ein Verfahren zur Gewinnung von Eisen aus Eisenoxid enthaltenem Abfall bekannt, bei dem aus dem Abfall sowie ungebundenem Kohlenstoff ein Formling unter Verwendung von Zement als Bindemittel hergestellt und anschließend einem Kupolofen zugeführt wird. Der ungebundene Kohlenstoff in Form von Koksgrus dient dabei in erster Linie als Energiequelle, soll aber auch eine Oxidation des Eisens vermeiden, das zusätzlich zu dem Eisenoxid in Form von Schrott beigement ist.

In der JP 10,330,822 ist ein Verfahren beschrieben, bei dem eisenoxidhaltige Abfälle, Aluminiumasche und SiC als Reduktionsmittel zu einem Formling kombiniert und dann einem Schmelzofen zugeführt werden. Dabei werden relativ geringe Mengen an SiC zugegeben.

Der Erfindung liegt die Aufgabe zugrunde, ein anderes Verfahren bereitzustellen, mit dem sich aus dem vorgenannten Abfall Eisen kostengünstig und in guter Qualität gewinnen läßt.

Diese Aufgabe wird erfindungsgemäß dadurch gelöst, daß aus dem Abfall und SiC unter Verwendung eines Bindemittels ein Formling hergestellt wird, bei dem das Mengenverhältnis (Gew.-%) des im Abfall enthaltenen Eisenoxids zu dem SiC zwischen 40:60 und 60:40 liegt, wonach der Formling einem Schachtofen, insbesondere einem Kupolofen, zugegeben und dort das Eisen aus dem Formling erschmolzen wird. Grundgedanke der Erfindung ist es also, eine Mischung aus eisenoxidhaltigem Abfall und SiC, gegebenenfalls zusätzlich mit einem Anteil ungebundenem Kohlenstoff unter Verwendung eines Bindemittels zu einem Formling zu verpressen und den Formling dann einem Schachtofen zwecks Erschmelzung des Eisens zuzugeben. In der Schmelze wirkt der Kohlenstoff des SiC nach Dissoziierung zu Si und C in der Schmelze auf das Eisenoxid desoxidierend, so daß ein Roheisen hoher Qualität gewonnen wird. Die Kosten dieses Verfahrens sind niedrig und machen es attraktiv für die Stahlwerke, sich ihrer vorgenannten Abfälle unter Verwendung des erfindungsgemäßen Verfahrens zu entledigen. Für die Gießereien ist das erfindungsgemäße Verfahren ebenfalls von Interesse, da sie hierdurch zusätzlich ein synthetisches Roheisen erhalten, wobei der Einsatz der Formlinge sehr flexibel gehandhabt werden kann.

Was das Mengenverhältnis von Eisenoxid zu SiC betrifft, sollte eine solche Menge an SiC und gegebenenfalls ungebundenen Kohlenstoffs enthalten sein, dass im Kupolofen eine wirksame Desoxidierung des Eisenoxids erzielt wird. Vorzugsweise sollte der Anteil so hoch sein, dass gesichert ist, dass das Eisenoxid im Schachtofen vollständig desoxidiert wird.

Als SiC kommt vor allem metallurgisches SiC in Frage, wie es auch für SiC-Formlinge verwendet wird. Es besteht jedoch auch die Möglichkeit, statt des metallurgischen SiC oder in Kombination mit diesem SiC-Kapsel- und/oder Brennplattenscherben und/oder keramisch gebundenen Schleifscheibenbruch als Siliziumträger zu verwenden, da sie ebenfalls hohe SiC-Gehalte haben. Unter ungebundenem Kohlenstoff sind solche Kohlenstoffarten zu verstehen, die nicht als chemische Verbindung mit anderen Stoffen - wie z.B. bei Carbiden - vorliegen, sondern freien Kohlenstoff bilden, wie beispielsweise Graphit, Koksgrus, Petrolkoks, Pechkoks, Gichtstäube oder eine Mischung davon. Dabei können auch Abfälle, beispielsweise Anoden- oder Kathodenbruch, Verwendung finden.

Was das Bindemittel betrifft, sollte der Gehalt im Formling wenigstens 10 Gew.-%, vorzugsweise höchstens 30 Gew.-% betragen. Als Bindemittel eignet sich insbesondere Zement.

Das erfindungsgemäße Verfahren läßt sich so durchführen, daß die Formlinge in hohen Anteilen in dem Schachtofen erschmolzen und hierdurch das Roheisen gewonnen wird. Die Formlinge können jedoch auch zusammen mit einer in dem Schachtofen ohnehin zu erschmelzenden Gattierung, beispielsweise bestehend aus Roheisen, Gußbruch und/oder Stahlschrott, eingebracht werden. Die Zugabe der erfindungsgemäßen Formlinge kann dann in Anpassung an die Zusammensetzung der Gattierung durchgeführt werden. Mit Hilfe der Formlinge kann die Gattierung entsprechend dem jeweiligen Anfall sehr flexibel zusammengesetzt werden.

Die Erfindung betrifft des weiteren einen Formling zur Durchführung des Verfahrens, der Eisenoxid sowie SiC, gegebenenfalls zusätzlich ungebundenen Kohlenstoff enthält und durch ein Bindemittel gebunden ist, wobei das Eisenoxid erfindungsgemäß in einem Abfall vorhanden ist, der bei der Erschmelzung von Eisen und Stahl angefallen ist und der einen Eisenanteil von 27 bis 63 %, vorzugsweise von 52 bis 55 %, hat. Zwar haben die vorbeschriebenen Abfälle einen relativ hohen Fe-Gehalt. Es ist jedoch nicht ausgeschlossen, daß die Abfälle zuvor mechanisch aufbereitet werden, beispielsweise um sie zu zerkleinern oder zur Erhöhung des Fe-Gehalts. Dies kann im Einzelfall nach Wirtschaftlichkeitsgesichtspunkten entschieden werden.

## Patentansprüche

1. Verfahren zur Gewinnung von Eisen aus eisenoxidhaltigem Abfall, der bei der Erschmelzung von Eisen und Stahl beispielsweise in Form von Stäuben, Schlacken oder dergleichen anfällt, wobei aus dem Abfall und SiC unter Verwendung eines Bindemittels ein Formling hergestellt wird, bei dem das Mengenverhältnis (Gew.-%) des im Abfall enthaltenen Eisenoxids zu dem SiC zwischen 40:60 und 60:40 liegt, wonach der Formling einem Schachtofen zugegeben und dort das Eisen aus dem Formling erschmolzen wird.

2. Verfahren nach Anspruch 1, **dadurch gekennzeichnet, daß** dem Formling zusätzlich ungebundener Kohlenstoff zugegeben wird.

3. Verfahren nach Anspruch 2, **dadurch gekennzeichnet, daß** der ungebundene Kohlenstoff Graphit, Koksgrus, Petrolkoks, Pechkoks, Gichtstaub oder eine Mischung davon ist.

4. Verfahren nach einem der Ansprüche 1 bis 3, **dadurch gekennzeichnet, daß** für den Formling metallurgisches SiC verwendet wird.

5. Verfahren nach einem der Ansprüche 1 bis 4, **dadurch gekennzeichnet, daß** für den Formling SiC-Kapsel- und/oder Brennplattenscherben und/oder keramisch gebundener Schleifscheibenbruch verwendet wird.

6. Verfahren nach einem der Ansprüche 1 bis 5, **dadurch gekennzeichnet, daß** dem Formling zumindest soviel SiC und gegebenenfalls ungebundener Kohlenstoff beigegeben wird, daß das Eisenoxid im Schachtofen vollständig desoxidiert wird.

7. Verfahren nach einem der Ansprüche 1 bis 6, **dadurch gekennzeichnet, daß** der Gehalt an Bindemittel im Formling wenigstens 10 Gew.-% beträgt.

8. Verfahren nach einem der Ansprüche 1 bis 7, **dadurch gekennzeichnet, daß** als Bindemittel Zement verwendet wird.

9. Verfahren nach einem der Ansprüche 1 bis 8, **dadurch gekennzeichnet, daß** der Formling in dem Schachtofen einer Gattierung zur Erschmelzung von Gußeisen zugegeben wird.

10. Verfahren nach einem der Ansprüche 1 bis 9, **dadurch gekennzeichnet, daß** der Formling einem Kupolofen zugegeben wird.

11. Verfahren nach einem der Ansprüche 1 bis 10, **dadurch gekennzeichnet, daß** der Abfall vor Bildung des Formlings mechanisch aufbereitet wird.

12. Formling zur Durchführung des Verfahrens nach einem der Ansprüche 1 bis 11, **dadurch gekennzeichnet, daß** der Formling Eisenoxid und SiC enthält und durch ein Bindemittel gebunden ist, wobei das Eisenoxid und das SiC in einem Mengenverhältnis (Gew.-%) vorliegen, das zwischen 40:60 und 60:40 liegt.

13. Formling nach Anspruch 12, **dadurch gekennzeichnet, daß** der Formling zusätzlich ungebundenen Kohlenstoff enthält.

14. Formling nach Anspruch 13, **dadurch gekennzeichnet, daß** der ungebundene Kohlenstoff Graphit, Koksgrus, Petrolkoks, Pechkoks, Gichtstaub oder eine Mischung davon ist.

15. Formling nach einem der Ansprüche 12 bis 14, **dadurch gekennzeichnet, daß** das SiC zumindest teilweise metallurgisches SiC ist.

16. Formling nach einem der Ansprüche 12 bis 15, **dadurch gekennzeichnet, daß** das SiC zumindest teilweise aus SiC-haltigen Kapsel- und Brennplattenscherben oder SiChaltigem Schleifscheibenbruch hergestellt ist.

17. Formling nach einem der Ansprüche 12 bis 16, **dadurch gekennzeichnet, daß** das Eisenoxid in einem Abfall vorhanden ist, der bei der Erschmelzung von Eisen und Stahl angefallen ist.

18. Formling nach Anspruch 17, **dadurch gekennzeichnet, daß** der Abfall einen Eisenanteil von 27 bis 63 Gew.-%, vorzugsweise von 52 bis 55 Gew.-%, hat.

19. Formling nach einem der Ansprüche 12 bis 18, **dadurch gekennzeichnet, daß** der Formling zumindest soviel an SiC und gegebenenfalls ungebundenem Kohlenstoff enthält, daß das Eisenoxid beim Schmelzen im Schachtofen vollständig desoxidiert wird.

20. Formling nach einem der Ansprüche 12 bis 19, **dadurch gekennzeichnet, daß** der Gehalt an Bindemittel im Formling wenigstens 10 Gew.-% beträgt.

21. Formling nach einem der Ansprüche 12 bis 20, **dadurch gekennzeichnet, daß** das Bindemittel Zement ist.

## Claims

1. A process for extracting iron from waste containing iron oxide which, when melting iron and steel, is produced, for example, in the form of dust, slop or similar, a briquet being produced from the waste and SiC using a binder, wherein the quantities ratio (% by weight) of the iron oxide contained in the waste to the SiC is between 40:60 and 60:40, after which the briquet is placed in a shaft furnace, and here the iron is melted from the briquet.

2. The process according to Claim 1, **characterised in that** free carbon is additionally added to the briquet.

3. The process according to Claim 2, **characterised in that** the free carbon is graphite, coke breeze, petroleum coke, pitch coke, flue dust or a mixture of the latter.

4. The process according to any of Claims 1 to 3, **characterised in that** metallurgical Sic is used for the briquet.

5. The process according to any of Claims 1 to 4, **characterised in that** SiC capsules and/or firing shelf shards and/or ceramically bonded grinding disc waste are used for the briquet.

6. The process according to any of Claims 1 to 5, **characterised in that** at least as much SiC, and if applicable free carbon, is added to the blank such that the iron oxide is fully deoxidised in the shaft furnace.

7. The process according to any of Claims 1 to 6, **characterised in that** the content of binder in the briquet is at least 10 % by weight.

8. The process according to any of Claims 1 to 7, **characterised in that** cement is used as the binder.

9. The process according to any of Claims 1 to 8, **characterised in that** the briquet is added in the shaft furnace to a charge make-up in order to melt cast iron.

10. The process according to any of Claims 1 to 9, **characterised in that** the briquet is added to a cupola melting furnace.

11. The process according to any of Claims 1 to 10, **characterised in that** the waste is mechanically processed before forming the briquet.

12. A briquet for implementing the process according to any of Claims 1 to 11, **characterised in that** the briquet contains iron oxide and SiC and is bonded by a binder, the iron oxide and the SiC being in a quantities ratio (% by weight) which is between 40:60 and 60:40.

13. The briquet according to Claim 12, **characterised in that** the briquet additionally contains free carbon.

14. The briquet according to Claim 13, **characterised in that** the free carbon is graphite, coke breeze, petroleum coke, pitch coke, flue dust or a mixture of the latter.

15. The briquet according to any of Claims 12 to 14, **characterised in that** the SiC is at least partially metallurgical SiC.

16. The briquet according to any of Claims 12 to 15, **characterised in that** the SiC is produced at least partially from capsules and firing shelf shards containing SiC or grinding disc waste containing SiC.

17. The briquet according to any of Claims 12 to 16, **characterised in that** the iron oxide is present in waste which has been produced when melting iron and steel.

18. The briquet according to Claim 17, **characterised in that** the waste has an iron proportion of between 27 and 63 % by weight, and preferably of between 52 and 55 % by weight.

19. The briquet according to any of Claims 12 to 18, **characterised in that** the briquet contains at least as much SiC and if appropriate free carbon such that the iron oxide is fully deoxidised in the shaft furnace when melted.

20. The briquet according to any of Claims 12 to 19, **characterised in that** the content of binder in the briquet is at least 10 % by weight.

21. The briquet according to any of Claims 12 to 20, **characterised in that** the binder is cement.

## Revendications

1. Procédé de récupération de fer à partir de rebuts ou déchets contenant de l'oxyde de fer qui se forment lors de la fonte de fer et d'acier par exemple sous la forme de poussières, de laitier ou équivalent, dans lequel à partir des rebuts et de SiC, en utilisant un liant, on fabrique une briquette dans laquelle le rapport de quantité (% en masse) entre l'oxyde de fer contenu dans les rebuts et le SiC est compris entre 40:60 et 60:40, suite à quoi la briquette est ajoutée dans un four vertical ou fourneau à cuve et le fer y est alors élaboré ou fondu à partir de la briquette.

2. Procédé selon la revendication 1, **caractérisé en ce que** l'on ajoute en outre à la briquette du carbone non lié.

3. Procédé selon la revendication 2, **caractérisé en ce que** le carbone non lié est du graphite, du menu ou poussière de coke, du coke de pétrole, du coke de brai, de la poussière de gueulard, ou un mélange de ceux-ci.

4. Procédé selon l'une des revendications 1 à 3, **caractérisé en ce que** l'on utilise pour la briquette du SiC métallurgique.

5. Procédé selon l'une des revendications 1 à 4, **caractérisé en ce que** l'on utilise pour la briquette des débris de cazettes de SiC et/ou de plaques de calcination et/ou des déchets de meule à liaison céramique.

6. Procédé selon l'une des revendications 1 à 5, **caractérisé en ce que** l'on ajoute à la briquette une quantité de SiC et éventuellement de carbone non lié au moins telle que l'oxyde de fer est entièrement désoxydé dans le four vertical ou fourneau à cuve.

7. Procédé selon l'une des revendications 1 à 6, **caractérisé en ce que** la teneur en liant dans la briquette est d'au moins 10 % en masse.

8. Procédé selon l'une des revendications 1 à 7, **caractérisé en ce que** l'on utilise du ciment comme liant.

9. Procédé selon l'une des revendications 1 à 8, **caractérisé en ce que** la briquette dans le four vertical ou fourneau à cuve est ajoutée à un lit de fusion pour élaborer ou fondre la fonte de fer.

10. Procédé selon l'une des revendications 1 à 9, **caractérisé en ce que** la briquette est ajoutée à un four de seconde fusion.

11. Procédé selon l'une des revendications 1 à 10, **caractérisé en ce que** les rebuts ou déchets sont préparés mécaniquement avant la formation de la briquette.

12. Briquette permettant de réaliser le procédé selon l'une des revendications 1 à 11, **caractérisée en ce que** la briquette contient de l'oxyde de fer et du SiC et est liée par un liant, l'oxyde de fer et le SiC étant présents selon un rapport de quantité (% en masse) qui est compris entre 40:60 et 60:40.

13. Briquette selon la revendication 12, **caractérisée en ce que** la briquette contient de plus du carbone non lié.

14. Briquette selon la revendication 13, **caractérisée en ce que** le carbone non lié est du graphite, du menu ou poussière de coke, du coke de pétrole, du coke de brai, de la poussière de gueulard, ou un mélange de ceux-ci.

15. Briquette selon l'une des revendications 12 à 14, **caractérisée en ce que** le SiC est au moins partiellement du SiC métallurgique.

16. Briquette selon l'une des revendications 12 à 15, **caractérisée en ce que** le SiC est fabriqué au moins partiellement à partir de débris de cazettes de SiC et de plaques de calcination contenant du Sic ou déchets de meule à liaison céramique contenant du SiC.

17. Briquette selon l'une des revendications 12 à 16, **caractérisée en ce que** l'oxyde de fer est présent dans un rebut qui s'est formé lors de l'élaboration ou la fusion du fer et de l'acier.

18. Briquette selon la revendication 17, **caractérisée en ce que** le rebut possède une fraction en fer comprise entre 27 et 63 % en masse, de préférence entre 52 et 55 % en masse.

19. Briquette selon l'une des revendications 12 à 18, **caractérisée en ce que** la briquette contient une quantité de SiC et éventuellement de carbone non lié au moins telle que l'oxyde de fer est entièrement désoxydé lors de la fusion dans un four vertical ou fourneau à cuve.

20. Briquette selon l'une des revendications 12 à 19, **caractérisée en ce que** la teneur en liant dans la briquette est d'au moins 10 % en masse.

21. Briquette selon l'une des revendications 12 à 20, **caractérisée en ce que** le liant est du ciment.
